(19) Europäisches Patentamt
European Patent Office
Office européen des brevets

(11) **EP 2 618 417 B1**

(12) **EUROPÄISCHE PATENTSCHRIFT**

(45) Veröffentlichungstag und Bekanntmachung des Hinweises auf die Patenterteilung:
**10.08.2016   Patentblatt 2016/32**

(51) Int Cl.:
***H01M 8/1011*** *(2016.01)*

(21) Anmeldenummer: **13000132.4**

(22) Anmeldetag: **11.01.2013**

(54) **Direkt-Methanol-Brennstoffzelle und Verfahren zum Betreiben derselben**

Direct methanol fuel cell and method for operating the same

Pile à combustible directe à méthanol et procédé de fonctionnement de celle-ci

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2012   DE 102012000870**

(43) Veröffentlichungstag der Anmeldung:
**24.07.2013   Patentblatt 2013/30**

(73) Patentinhaber: **Forschungszentrum Jülich GmbH 52425 Jülich (DE)**

(72) Erfinder: **Kulikovsky, Andrei 52385 Nideggen-Abenden (DE)**

(56) Entgegenhaltungen:
**EP-A2- 1 453 131     EP-A2- 1 571 724 US-A- 5 958 616**

- **A.A. KULIKOVSKY: "A model for mixed potential in direct methanol fuel cell cathode and a novel cell design", ELECTROCHIMICA ACTA, Bd. 79, 1. Juli 2012 (2012-07-01), Seiten 52-56, XP007921791,**

EP 2 618 417 B1

Printed by Jouve, 75001 PARIS (FR)

**Beschreibung**

Die Erfindung betrifft eine Brennstoffzelle, insbesondere eine Niedertemperatur-Brennstoffzelle, die vorzugsweise mit Methanol, bzw. einer wässrigen Methanollösung betrieben wird.

Stand der Technik

Brennstoffzellen im Allgemeinen und Direkt-Methanol-Brennstoffzellen (DMFC = direct methanol fuel cell) im Besonderen sind seit langer Zeit bekannt. Bei Direkt-Methanol Brennstoffzellen (DMFC) wird die chemische Energie aus dem flüssigen Methanol direkt in elektrische Energie umgewandelt. Da die Energiedichte von Methanol wesentlich größer ist als von Wasserstoff, sind DMFC-Systeme im Vergleich zu anderen Brennstoffzellentypen sehr interessant. Der Wirkungsgrad einer Direkt-Methanol-Brennstoffzelle ist jedoch deutlich geringer als der Wirkungsgrad einer mit Wasserstoff betriebenen Brennstoffzelle, weil die Kinetik der Methanoloxidation deutlich langsamer verläuft und einige physikalisch-chemischen Prozesse, die für die Umwandlung des Methanols wichtig sind, im Betrieb genau aufeinander abgestimmt werden müssen.

Ebenfalls bekannt ist, dass beim Betrieb dieser Brennstoffzellen regelmäßig das Problem auftritt, dass durch die Polymermembran als Elektrolyt ein unerwünschter Transport von Methanol von der Anodenseite zur Kathodenseite stattfindet. Methanolmoleküle sind vom Aufbau her Wassermolekülen sehr ähnlich und werden daher ähnlich wie die Wassermoleküle in die Membran eingelagert und zur Kathode transportiert. Dies bedeutet nicht nur eine Verringerung der Brennstoffausnutzung.

Da herkömmliche Kathoden mit Platin als Katalysator neben der Sauerstoffreduktion auch die Methanoloxidation katalysieren, reagiert das zur Kathode transportierte Methanol dort mit dem Sauerstoff und wird elektrochemisch oxidiert. Dadurch entsteht ein Gradient in der Methanolkonzentration über die Membran. Dieser Gradient führt zu einem permanenten Methanolfluss, der als Methanolpermeation oder auch "methanol-crossover" bezeichnet wird.

Gleichzeitig stellt sich an der Kathode ein Mischpotential ein, das von beiden Reaktionen (Methanoloxidation und Sauerstoffreduktin) bestimmt wird. Die bei der Oxidation freigesetzten Elektronen und Protonen werden in der Sauerstoffreduktionszone umgehend neutralisiert und tragen dadurch nicht zu einem extern abgegriffenen Stromfluss bei. Dadurch kommt es nachteilig zu einer Verringerung der Zellspannung (um 50...100 mV bei 80°C und einer Stromdichte von 100 mA/cm$^2$ im Betrieb).

Um dieses Problem zu umgehen, wurde in der Vergangenheit beispielsweise daran gearbeitet, Kathodenkatalysatoren zu finden, die nur die Sauerstoffreduktion katalysieren, nicht aber die Methanoloxidation. Hier erscheinen unter anderem die halbleitenden Chalkogenide einiger Übergangsmetalle als aussichtsreich, z. B. die nicht stöchiometrischen Verbindungen $Ru_xSe_y$ und $Mo_xRu_ySe_z$. Derzeit wird beispielsweise daran gearbeitet, durch Optimierung der Zusammensetzung des Katalysators, der Synthesebedingungen bei der Katalysatorherstellung und der Herstellung der Katalysatorschicht Kathoden zu erhalten, die in ihrer elektrokatalytischen Aktivität für die Sauerstoffreduktion mit den herkömmlichen Platinkatalysatoren konkurrieren können.

Der permanente parasitäre Methanolfluss durch die Membran von der Anode zur Kathode verursacht an der Kathode einer Direkt-Methanol-Brennstoffzelle simultan eine kathodische Sauerstoff Reduktionsreaktion (ORR = oxygen-reduction reaction) und eine anodische Methanol-Oxidationsreaktion (MOR = metanol-oxidations reaction). Diese beiden gleichzeitig ablaufenden Reaktionen führen zu einem erheblichen Brennstoffverlust und damit zu einer reduzierten Brennstoffausnutzung. Zusätzlich erhöhen diese Reaktionen den Sauerstofffluss durch die porösen Kathodenschichten und verringern somit die zur Verfügung stehende Menge an Sauerstoff für die gewünschten elektrochemischen Reaktionen. All diese Faktoren führen zu einem deutlichen Verlust an Zellspannung (Mischpotentialbildung), welches als Hauptproblem beim Betrieb einer Direkt-Methanol-Brennstoffzelle angesehen wird [1].

Dieser nachteilige Effekt bei bislang bekannten Direkt-Methanol Brennstoffzellen wird nachfolgend elektrochemisch untermauert. Dabei wird der Betriebszustand des Leerlaufs der Brennstoffzelle zu Grunde gelegt. Im Leerlauf fließt über den äußeren Stromkreis der Zelle kein Gesamtstrom und an den beiden Elektroden liegt die maximale Zellspannung, die sog. Leerlaufspannung $U_0$, an.

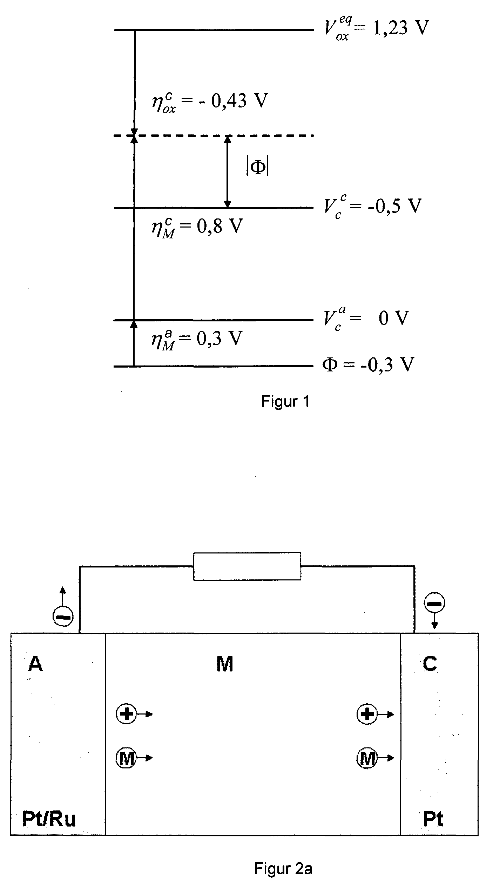

Die Figur 1 zeigt schematisch die Potentiale in einer Standard 2-Elektroden Direkt-Methanol Brennstoffzelle im Lastfall unter normalen Betriebsbedingungen. Unter normalen Betriebsbedingungen sind insbesondere eine 1 molare wässrige Methanollösung als Brennstoff, Luft als Reduktionsmittel auf der Kathodenseite sowie Temperaturen um 60 °C zu verstehen. Die allgemeine Formel für die Halbzellen Überspannung $\eta$, welches die Triebkraft für die elektrochemische Reaktion darstellt, lautet:

$$\eta = V_c - \Phi - V^{eq} \qquad\qquad (1)$$

Die Überspannung ist die Abweichung des Elektrodenpotentials vom Gleichgewichtspotential bei Stromfluss. In der Formel bedeuten $V_c$ das Elektrodenpotential der Kohlenstoffphase, $\varPhi$ das Potential der Elektrolytphase und $V^{eq}$ ist das Gleichgewichtspotential der elektrochemischen Reaktion der Halbzelle.

Das Gleichgewichtspotential $V^{eq}$ der Oxidations-Reduktions-Reaktion beträgt 1,23 V, während das Gleichgewichtspotential $V^{eq}$ der Methanol-Reduktionsreaktion mit 0,028 V nahezu zu vernachlässigen ist.

Es wird angenommen, dass die Anode geerdet und das Membranphasen Potential sowohl an der Anode, als auch an der Kathode $\varPhi$ = -0,3 V beträgt, was für einen Direkt-Methanolbetrieb mit einer Stromdichte von ca. 100 mA/cm$^2$ ein typischer Wert ist (siehe auch Figur 1). Entsprechend der Gleichung (1) beträgt an der Anode die Überspannung für die Methanol-Reduktionsreaktion $\eta_M^a \cong 0{,}3V$ , das bedeutet, dass die Methanol-Oxidationsreaktion in Richtung Oxidation verschoben wird. Auf der Kathodenseite ist Überspannung für die Sauerstoff-Reduktionsreaktion mit $\eta_{ox}^a \cong -0{,}43V$ negativ, was bedeutet, dass Sauerstoff-Reduktionsreaktion in Richtung Reduktion verschoben wird.

Wichtig ist, dass die Überspannung für die Methanol-Oxidationsreaktion an der Kathodenseite mit $\eta_M^c \cong 0{,}8V$ viel größer ist, als auf der Anodenseite mit $\eta_M^a \cong 0{,}3V$ 0,3V (siehe Figur 1). Dies bedeutet, dass die Methanol-Oxidationsreaktion auf der Kathodenseite viel stärker in Richtung Oxidation verschoben wird, als auf der Anodenseite.

Das heißt, dass unter normalen Betriebsbedingungen das durch die Elektrolytmembran permeierende Methanol an der Kathode elektrochemisch oxidiert wird. Eine große Überspannung $\eta_M^c \cong 0{,}8V$ führt zu einer hohen Oxidationsrate des Methanols. Die in dieser Reaktion entstehenden Protonen und Elektronen werden jedoch durch die an der Kathode stattfindende Sauerstoff-Reduktionsreaktion umgehend neutralisiert, und tragen somit nicht zur Stromerzeugung bei. Zusätzlich bewirkt die parasitäre Methanol-Oxidationsreaktion einen erhöhten Sauerststoffstrom durch die poröse Diffusions- und Katalysatorschicht der Kathode, was nachteilig ebenfalls zu einem Spannungsverlust führt.

Aus EP 1 453 131 A2 ist eine Polymer Festelektrolyt-Brennstoffzelle bekannt, die eine Anode, eine Kathode und eine zusätzliche, interne Elektrode umfasst. Die zusätzliche Elektrode ist von den anderen Elektroden durch eine Protonen leitende Membran getrennt und ist mit der Anode oder der Kathode über ein Spannungsversorgungsmittel verbunden. Durch diese Maßnahme erreicht man eine höhere Spannung zwischen der Anode und der Kathode.

Ferner wird auch in EP 1 571 724 A2 eine Polymer Festelektrolyt-Brennstoffzelle mit einer Anode, einer Kathode und einer Protonen leitenden Membran beschrieben, die wenigstens eine zusätzliche Elektrode aufweist. Ferner umfasst die Brennstoffzelle ein Polarisationsmittel, zur elektrochemischen Polarisierung der zusätzlichen Elektrode, zur Oxidation oder Reduktion von Brennstoff oder Oxidationsmittel im Inneren der Membran. Das Polarisationsmittel kann dabei eine elektrisch leitende Verbindung umfassen und einen Elektronenleiter oder auch einen Elektronen leitenden Widerstand umfassen. Durch diese Maßnahme wird eine höhere Spannung zwischen Anode und Kathode erzielt.

Auch aus US 5,958 616 A ist eine Direkt-Methanol-Brennstoffzelle bekannt, die eine Anode, eine Kathode und eine zusätzliche Elektrode beinhaltet. Die zusätzliche Elektrode ist von den anderen Elektroden durch identische ionenleitende Membranen getrennt und steht mit der Kathode über einen Widerstand elektrisch in Kontakt. Brennstoff, der von der Anode durch die ionenleitende Membran diffundiert, wird an der zusätzlichen Elektrode elektrochemisch oxidiert und erreicht somit die Kathode nicht. Durch diese Maßnahme erreicht man eine höhere Spannung zwischen Anode und Kathode.

### Aufgabe und Lösung

Aufgabe der Erfindung ist es, eine Brennstoffzelle insbesondere eine Direkt-Methanol-Brennstoffzelle zu schaffen, die das bislang elektrochemisch ungenutzte Methanol der Methanol-Permeation durch die Membran effektiv zur Spannungserzeugung nutzt und damit effektiver als eine bislang bekannte Direkt-Methanol-Brennstoffzelle betrieben werden kann.

Die Aufgabe der Erfindung wird gelöst durch ein Verfahren zum Betreiben eine Direkt-Methanol-Brennstoffzelle gemäß Hauptanspruch, sowie durch einen zur Durchführung dieses Verfahrens geeignete Direkt-Methanol-Brennstoffzelle gemäß Nebenanspruch. Vorteilhafte Ausgestaltungen der Brennstoffzelle finden sich in den jeweils darauf rückbezogenen Unteransprüchen wieder.

### Gegenstand der Erfindung

Im Rahmen der Erfindung wurde herausgefunden, dass eine Direkt-Methanol-Brennstoffzelle, die neben einer Anode und einer Kathode eine zwischen diesen beiden angeordnete zusätzliche, dritte Elektrode E* aufweist, vorteilhaft geeignet ist, den durch die Membran stattfindenden Methanolfluss in einen effektiven Protonen- und Elektronenfluss umzuwandeln.

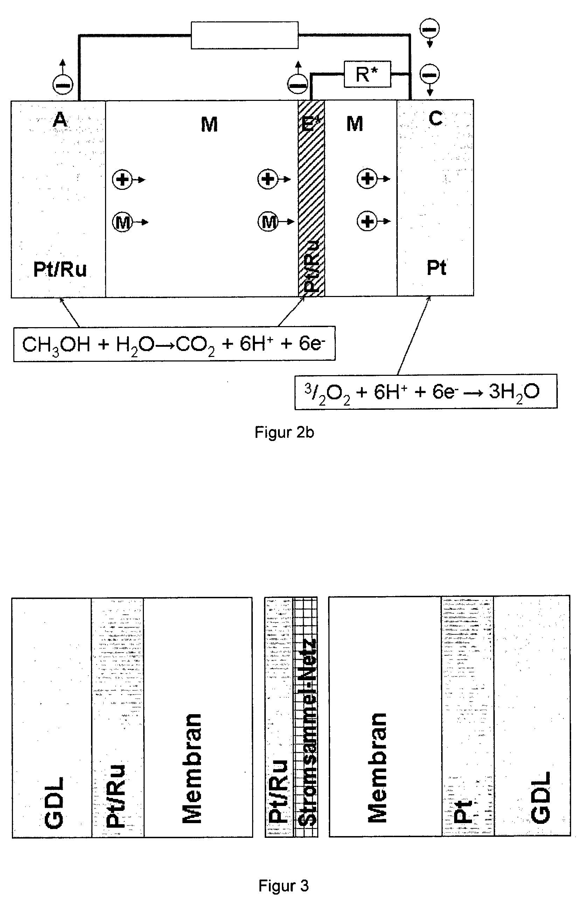

Das Potential der Kohlenstoffphase dieser dritten Elektrode E* (Hilfselektrode) liegt nahe an dem der Kohlenstoffphase der Kathode (Figur 2). Daher ist in dieser dritten Elektrode die Überspannung für die Methanol-Oxidations-Reaktion mit 0,8 V sehr hoch, so dass diese Hilfselektrode das durch die Membran permeierte Methanol sehr effektiv in Protonen und Elektronen umwandelt.

Die zwischen der Anode und der Kathode angeordnete, erfindungsgemäße zusätzliche dritte Elektrode E* überwindet einerseits das Problem, dass das durch die Membran permeierende

Methanol nichts zur elektrochemischen Spannungserzeugung beiträgt, und zweitens, dass das durch die Membran permeierende Methanol bis zur Kathode gelangt, und dort nachteilig Sauerstoff verbraucht.

Die Membranelektrodeneinheit (MEA = membran electrode assembly) einer Direkt-Methanol-Brennstoffzelle besteht in der Regel aus einer Polymer-Elektrolyt-Membran und zwei Edelmetallelektroden, die beidseitig direkt oder mittels Heißpressen von katalysatorbeschichteten Gasdiffusionselektroden auf die Membran aufgebracht werden.

Die Anode und Kathode können dabei zusammen mit einer separaten porösen Gasdiffusionsschicht (GDL = gas diffusion layer), die beispielsweise aus einem grobporigen, elektrisch leitfähigem Material wie z. B. Kohlefasergewebe oder poröses Kohlepapier besteht, oder selbst porös als integrierte Gasdiffusionselektrode (Gasdiffusionselektrode = gas diffusion electrode) ausgestaltet sein.

Als Katalysator auf der Anodenseite wird häufig Platin/Ruthenium und auf der Kathodenseite nur Platin eingesetzt. Der Katalysator kann dabei ungeträgert, das heißt als reine Katalysatorschicht, oder auf Kohlenstoff geträgert vorliegen. Häufig wird den Elektroden zusätzlich ein bestimmter Anteil des eingesetzten Elektrolyt-Polymers beigemischt werden. Dadurch soll sichergestellt werden, dass die Elektroden mechanisch gebunden werden und gleichzeitig Ionen leitende Pfade durch die Elektroden zur Membran hergestellt werden (3-Phasen Modell).

Der elektrische Kontakt wird über elektrisch leitenden Endplatten realisiert, die regelmäßig auch die Strömungskanäle zur Verteilung des Betriebsmittels aufweisen.

Im Rahmen der Erfindung wird eine 3-Elektroden Direkt-Methanol-Brennstoffzelle vorgeschlagen. Im Vergleich zu herkömmlichen 2-Elektroden Brennstoffzellen weist die erfindungsgemäße 3-Elektroden Direkt-Methanol-Brennstoffzelle eine zusätzliche Elektrode E* auf, die zwischen der Anode und der Kathode angeordnet ist.

Die zusätzliche Elektrode E* umfasst - ähnlich wie eine Anode - ein Ionen-leitendes Material und ferner einen Kohlenstoff-geträgerten oder auch ungeträgerten Katalysator. Als Material für das Ionen-leitende Material kann beispielsweise auf Nafion® zurückgegriffen werden. Als Katalysator sind übliche bereits für Anoden bekannte Pt/Ru-Katalysatoren geeignet.

Insofern kann die zusätzliche Elektrode E* identisch aufgebaut sein, wie die Anode. Für die erfindungsgemäße Wirkungsweise ist dies aber nicht zwingend erforderlich.

Wichtig ist dabei, dass die elektrisch leitfähige Phase der zusätzlichen Elektrode E* mit der Kathode über einen kleinen Widerstand R* verbunden ist. Im Rahmen dieser Erfindung ist unter kleinem Widerstand dabei ein Wert wischen 0,1 und 1,0 Ohm · $cm^2$ zu versehen. Der Wert bezieht sich dabei auf die aktive Zellfläche (Flächenwiderstand).

Zwischen den Elektroden (Anode, Kathode und zusätzliche Elektrode E*) befinden sich jeweils Ionen leitende Membranen als Elektrolyte. Als ein geeignetes Material für eine solche Ionen leitende Membran wäre Nafion® zu nennen. Die beiden Ionen leitenden Membranen, das heißt die zwischen Anode und der Elektrode E* einerseits und die zwischen E* und der Kathode anderseits, können vorteilhaft aus demselben Material bestehen. Dies ist aber nicht zwingend erforderlich. Es können auch zwei unterschiedliche Ionen leitende Membranen eingesetzt werden.

Die zusätzliche Elektrode E* dient als zweite, und wie sich herausgestellt hat, deutlich effektivere Anode, die den durch die Membran permeierenden Methanolstrom in einen nützlichen Strom aus Protonen und Elektronen umwandelt. Da der Widerstand R* sehr klein ist, weist das Kohlenstoffpotential der zusätzlichen Elektrode E* nahezu denselben Wert auf, wie das Kohlenstoffpotential der Kathode. Gleichzeitig weist das Elektrolytphasenpotential der zusätzlichen Elektrode E* einen ähnlichen Wert auf, wie das Elektrolytphasenpotential der Anode.

Daher übersteigt die Überspannung der Methanol-Reduktionsreaktion in der zusätzlichen Elektrode E* bei weitem die der Anode. Das führt dazu, dass die zusätzliche Elektrode E* auf sehr effektive Weise den durch die Membran permeierenden Methanolstrom in einen nützlichen Strom aus Protonen und Elektronen umwandelt.

Darüber hinaus verhindert diese zusätzliche Elektrode E* vorteilhaft, dass durch die Elektrolytmembran permeierendes Methanol bis an die Kathode gelangt. Dies führt dazu, dass in einer solchen erfindungsgemäßen 3-Elektroden Brennstoffzelle das Mischpotential, das bedeutet der Spannungsverlust auf Grund des Methanol crossovers, an der Kathode viel geringer ausfällt.

Ein zusätzlicher Vorteil liegt darin, dass es dieses System erlaubt durch Variation des Wertes des Widerstandes R* die Reaktionsrate der Methanoloxidation an der zusätzlichen Elektrode E* zu regulieren. Je größer der Wert für R* gewählt wird, desto geringer ist die Methanoloxidation.

Es hat sich herausgestellt, dass es vorteilhaft ist, wenn die zusätzliche Elektrode E* näher an der Kathode als an der Anode angeordnet ist. Dies bewirkt eine Minimierung des Membranphasen-Potentials zwischen der zusätzlichen Elektrode E* und der Kathode.

Insgesamt ist die zusätzliche Elektrode E* vorteilhaft dazu geeignet, den durch die Membran stattfindenden Methanolfluss in einen effektiven Protonen- und Elektronenfluss umzuwandeln. Die durch den über die Ionen leitende Membran üblicherweise stattfindenden Methanol Transport (crossover) verursachte nachteilige Mischpotentialbildung an der Kathode kann so regelmäßig verhindert werden.

Vorteilhaft können die Anode und die Hilfselektrode identische Zusammensetzungen aufweisen, ebenso wie die beiden Membranen zwischen Anode und Hilfselektrode einerseits, und Hilfselektrode und Kathode andererseits. Insofern sollte die Herstellung einer erfindungsgemäßen 3-Elektroden Brennstoffzelle keine großen Schwierigkeiten bereiten.

Spezieller Beschreibungsteil

Nachfolgend wird die Erfindung anhand von Figuren näher erläutert, ohne dass es dadurch zu einer Einschränkung des Schutzbereiches kommt. Neben der Darstellung der einzelnen Potentiale in einer DMFC gemäß Figur 1 zeigen:

Figur 2a:  Aus dem Stand der Technik bekannter Aufbau einer Direkt-Methanol-Brennstoffzelle mit einer Anode und einer Kathode.

Figur 2b:  Erfindungsgemäßer Aufbau einer Direkt-Methanol-Brennstoffzelle mit einer zusätzlichen dritten Elektrode E*, die zwischen der Anode und der Kathode angeordnet ist.

Figur 3:  Schematische Abfolge der 8-Schichtstruktur bei der Herstellung einer erfindungsgemäßen Direkt-Methanol-Brennstoffzelle mit einer zusätzlichen dritten Elektrode E*.

In Figur 2a wird einerseits der Weg der an der Anode durch Methanol-Oxidation erzeugten Protonen durch den Ionen leitenden Elektrolyten (Membran) zur Kathode dargestellt, als auch den Weg, den das durch den Elektrolyten permeierenden Methanol (Methanol crossover) zur Kathode nimmt. Das an der Kathode ankommende Methanol führt dort zu einem Spannungsverlust (Mischpotential), welcher sich nachteilig auf die Effektivität der gesamten Brennstoffzelle auswirkt.

Figur 2b zeigt eine Ausgestaltung der erfindungsgemäßen Direkt-Methanol-Brennstoffzelle mit der zusätzlichen dritten Elektrode E*, die zwischen der Anode und der Kathode angeordnet ist. Die Elektrode E* und die Kathode sind elektrisch leitend über einen Widerstand R* verbunden. Während die zusätzliche Elektrode E* für die Wanderung der Protonen von der Anode zur Kathode kaum ein Hindernis darstellt, werden die von der Anode permeierenden Methanolmoleküle durch die zusätzliche Elektrode abgefangen.

Nachfolgend wird die Herstellung eines Ausführungsbeispiels einer erfindungsgemäßen 3-Elektroden-Brennstoffzelle näher erläutert, ohne dass sich dadurch Einschränkungen für den Schutzbereich ergeben. Ein Fachmann ist in der Lage daraus entsprechende alternative Ausgestaltungen mitzulesen.

Die Membran-Elektroden-Einheit, auch MEA genannt, für eine Standard Methanol-Brennstoffzelle umfasst fünf Schichten. Die entsprechende Membran-Elektroden-Einheit für die erfindungsgemäße 3-Elektroden-Brennstoffzelle umfasst dementsprechend drei weitere Schichten. Dies sind die die Hilfselektrode selbst, ein Netz mit der Funktion eines Stromkollektors sowie eine weitere (Elektrolyt-)Membran.

Die Anode und die Kathode umfassen standardmäßig eine auf einer Gasdiffusionsschicht aufgebrachte Katalysatorschicht. Dazu wird Katalysatortinte bzw. -suspension mittels eines Rakelstreichverfahrens auf das Kohlenstoffgewebe (z. B. "A"-Cloth der Fa. E-TEK, Schichtdicke ~ 350 □m) der Gasdiffusionsschicht aufgetragen.

Die Katalysatortinte für die Anode und die Hilfselektrode E* besteht aus Isopropanol, Kohlenstoff geträgerte Pt/Ru-Katalysator Partikel mit 60 Gew.-% Pt/Ru und 40 Gew.-% Kohlenstoff (z. B. Johnson Matthey 'HiSpec10000') sowie Nafion® als Ionen leitende Phase. Die Katalysatortinte für die Kathode besteht aus Isopropanol, Kohlenstoff geträgerte Pt-Katalysator Partikel mit 60 Gew.-% Pt und 40 Gew.-% Kohlenstoff (z. B. Johnson Matthey 'HiSpec9100') sowie Nafion® als Ionen leitende Phase.

Die Beladung der Anode mit Pt/Ru-Katalysator beträgt ca. 2 mg/cm$^2$. Auf der Kathodenseite wird der Pt-Katalysator mit einer Beladung von ebenfalls ca. 2 mg/cm$^2$ eingesetzt [2], was einer Standard Elektrodenschichtdicke von ca. 100 µm entspricht. Die Beladung der Hilfselektrode E* mit Pt/Ru-Katalysator kann auch nur 0,2 mg/cm$^2$ betragen, was dann jedoch einer Elektrodenschichtdicke von ca. 10 µm entspricht.

Die Membran (Elektrolytschicht) mit der Hilfselektrode E* kann auf dieselbe Weise hergestellt werden, wie üblicherweise mit Katalysator beladene Membranen hergestellt werden [3]. Bei dieser Methode wird eine Abziehfolie (z. B. mit Kapton® oder Glasfaser verstärktes PTFE von Reichelt Chemietechnik GmbH & Co. KG) als Substrat für die Herstellung der ersten Katalysatorschicht verwendet. Die Katalysatortinte umfassend Isopropanol, Pt/Ru-Katalysatorteilchen sowie Nafion® wird mit einem Rakel auf die Abziehfolie aufgebracht. Die so erzeugte Schicht wird noch heiß (T ~ 130 °C) mit der Nafion®-Membran verpresst (P ~ 0,5 kN/cm$^2$). Im Anschluss an das Heißpressen wird die Abziehfolie von dem Katalysator/Membran-verbund abgezogen.

Der elektrische Kontakt mit der Kohlenstoffphase der Hilfselektrode E* wird über ein Netz aus dünnen Platin- oder Goldfäden sichergestellt. Der Durchmesser der Fäden beträgt ca. 10 µm, die Netzweite beträgt ungefähr zwischen 0,1 und 1 mm.

Zum Schluss wird die 8-lagige Schichtstruktur aus Gasdiffusionsschicht mit Standardanode, Gasdiffusionsschicht mit Standardkathode, Membran mit Hifselektrode E*, Stromsammlernetz und der weiteren Membran wie in Figur 3 gezeigt zusammengefügt und heiß verpresst. Auch hier werden Temperaturen von ca. 130 °C und ein Druck von ca. 0,5 kN/cm$^2$ eingestellt. Das Stromsammlernetz kann dabei sowohl auf der rechten Seite, wie in Figur 3 dargestellt, als auch auf der linken Seite der Hilfselektrode E* (nicht dargestellt) angeordnet sein.

Die Schichtdicke der Membran zwischen Anode und Hilfselektrode E* (in Figur 3 auf der linken Seite) liegt in der Größenordnung von ca. 100 μm. Die Schichtdicke der Membran zwischen Kathode und Hilfselektrode E* (in Figur 3 auf der rechten Seite) liegt hier bei ca. 10 μm.

In der Anmeldung zitiert:

[1] C. Y. Du, T. S. Zhao, C. Xu; Journal of Power Sources 167(2007) 265-271.

[2] A. A. Kulikovsky, H. Schmitz, K. Wippermann, J. Mergel, B. Fricke, T. Sanders and D. U. Sauer. DMFC: Galvanic or Electrolytic Cell? Electrochem. Comm., 8 (2006) 754 - 760.

[3] K. Wippermann, B. Richter, K. Klafki, J. Mergel, G. Zehl, I. Dorbandt, P. Bogdanoff, S. Fiechter, and S. Kaytakoglu. Carbon Supported Ru-Se as Methanol Tolerant Catalysts for DMFC cathodes. Part II: Preparation and Characterisation of MEAs. J. Appl. Electrochem., 37 (2007) 1399.

**Patentansprüche**

1. Verfahren zum Betreiben einer Direkt-Methanol-Brennstoffzelle,
   umfassend eine Anode, eine Kathode, sowie eine zwischen diesen angeordnete Ionen leitende Membran als Elektrolyt,
   wobei zwischen der Anode und der Kathode eine zusätzliche Elektrode E* angeordnet ist, die über einen variabel ausgestalteten Widerstand R* mit der Kathode Elektronen leitend verbunden ist, mit den Schritten

   - der Kathode wird ein Reduktionsmittel zugeführt und der Anode wird Methanol zugeführt,
   - an der Kathode läuft eine Sauerstoff-Reduktionsreaktion ab,
   - an der Anode läuft eine Methanol-Oxidationsreaktion ab,
   - an der zusätzlich zwischen Anode und Kathode angeordneten Elektrode E* läuft auf Grund des Methanolcrossovers eine zusätzliche Methanol-Oxidationsreaktion ab,
   - wobei die an der zusätzlichen Elektrode E* gebildeten Protonen und Elektronen zur Kathode geleitet werden, und
   - wobei durch Variation des Widerstandes R* mit einem Flächenwiderstand zwischen 0,1 und 1 Ohm · cm$^2$ bezogen auf die aktive Zellfläche die Reaktionsrate der Methanoloxidation an der Hilfselektrode E* reguliert wird.

2. Direkt-Methanol-Brennstoffzelle zur Durchführung des Verfahrens nach Anspruch 1, umfassend eine Anode, eine Kathode, sowie eine zwischen diesen angeordnete Ionen leitende Membran als Elektrolyt, sowie eine zwischen der Anode und der Kathode zusätzlich angeordnete Elektrode E*,
   **dadurch gekennzeichnet,**
   **dass** die zusätzliche Elektrode E* über einen variabel ausgestalteten Widerstand R* mit einem Flächenwiderstand zwischen 0,1 und 1 Ohm · cm$^2$ bezogen auf die aktive Zellfläche mit der Kathode Elektronen leitend verbunden ist.

3. Direkt-Methanol-Brennstoffzelle nach Anspruch 2, mit einer zusätzlichen Elektrode E*, deren Zusammensetzung identisch ist mit der der Anode.

4. Direkt-Methanol-Brennstoffzelle nach einem der vorhergehenden Ansprüche 2 bis 3, mit einer zusätzlichen Elektrode E* umfassend Nafion® und einen Kohlenstoff geträgerten Platin/Ruthenium-Katalysator.

5. Direkt-Methanol-Brennstoffzelle nach einem der vorhergehenden Ansprüche 2 bis 4, bei der zwischen der Anode und der zusätzliche Elektrode E* und zwischen der zusätzlichen Elektrode E* und der Kathode jeweils eine Ionen leitende Membran mit identischer Zusammensetzung angeordnet ist.

6. Direkt-Methanol-Brennstoffzelle nach vorhergehendem Anspruch 5, bei der die Schichtdicken der Ionen leitenden Membranen zwischen der Anode und der zusätzlichen Elektrode E* und zwischen der zusätzlichen Elektrode E* und der Kathode identisch sind.

7. Direkt-Methanol-Brennstoffzelle nach einem der vorhergehenden Ansprüche 2 bis 5, bei der die Schichtdicke der Ionen leitenden Membran zwischen der Anode und der zusätzlichen Elektrode E* größer ist als die zwischen der zusätzlichen Elektrode E* und der Kathode.

**Claims**

1. Method for operating a direct methanol fuel cell,
comprising an anode and a cathode as well as an ion-conducting membrane arranged between these as electrolyte, in which an additional electrode E* is arranged between the anode and the cathode, which is connected to the cathode in an electron-conducting way through a resistance R* configured to be variable with the steps

   - a reducing agent is supplied to the cathode and methanol is supplied to the anode,
   - an oxygen reducing reaction takes place at the cathode,
   - a methanol oxidation reaction takes places at the anode,
   - an additional methanol oxidation reaction also takes place at the additional electrode E* arranged between the anode and the cathode because of methanol crossover,
   - in which the protons and electrons formed at the additional electrode E* are conducted to the cathode and
   - in which the reaction rate of the methanol oxidation at the auxiliary electrode E* is regulated through variation of the resistance R* with a surface resistance between 0.1 and 1 Ohm $\cdot$ cm$^2$ in relation to the active cell surface.

2. Direct methanol fuel cell for carrying out the method according to claim 1, comprising an anode and a cathode as well as an ion-conducting membrane arranged between these as electrolyte as well as an additional electrode E* arranged between the anode and the cathode,
**characterised in that**
the additional electrode E* is connected to the cathode in an electron-conducting way through a resistance R* configured to be variable with a surface resistance between 0.1 and 1 Ohm $\cdot$ cm$^2$ in relation to the active cell surface.

3. Direct methanol fuel cell according to claim 2 with an additional electrode E*, the composition of which is identical to that of the anode.

4. Direct methanol fuel cell according to one of previous claims 2 to 3 with an additional electrode E* comprising Nafion® and a carbon-supported platinum/ruthenium catalyst.

5. Direct methanol fuel cell according to one of previous claims 2 to 4, in which an ion-conducting membrane with identical composition is arranged between the anode and the additional electrode E* and between the additional electrode E* and the cathode.

6. Direct methanol fuel cell according to previous claim 5, in which the layer thicknesses of the ion-conducting membranes between the anode and the additional electrode E* and between the additional electrode E* and the cathode are identical.

7. Direct methanol fuel cell according to one of previous claims 2 to 5, in which the layer thickness of the ion-conducting membrane between the anode and the additional electrode E* is greater than that between the additional electrode E* and the cathode.

**Revendications**

1. Procédé servant à faire fonctionner une pile à combustible directe à méthanol,
comprenant une anode, une cathode ainsi qu'une membrane conductrice d'ions disposée entre l'anode et la cathode, faisant office d'électrolyte,
dans lequel une électrode E* supplémentaire est disposée entre l'anode et la cathode, laquelle est reliée de manière à conduire des électrons à la cathode par l'intermédiaire d'une résistance R* à configuration variable, lequel procédé comprend les étapes qui suivent :

- un agent de réduction est amené à la cathode et du méthanol est amené à l'anode,
- une réaction de réduction d'oxygène se déroule au niveau de la cathode,
- une réaction d'oxydation du méthanol se déroule au niveau de l'anode,
- une réaction d'oxydation de méthanol supplémentaire se déroule en supplément au niveau de l'électrode E* disposée en supplément entre l'anode et la cathode du fait du crossover de méthanol,
- dans lequel les protons et les électrons formés au niveau de l'électrode E* supplémentaire sont conduits à la cathode, et
- dans lequel le taux de réaction de l'oxydation du méthanol est régulé au niveau de l'électrode auxiliaire E* par la variation de la résistance R* avec une résistance de surface comprise entre 0,1 et 1 ohm x cm$^2$ par rapport à la surface cellulaire active.

2. Pile à combustible directe à méthanol servant à mettre en oeuvre le procédé selon la revendication 1, comprenant une anode, une cathode ainsi qu'une membrane conductrice d'ions disposée entre l'anode et la cathode, faisant office d'électrolyte, ainsi qu'une électrode E* disposée en supplément entre l'anode et la cathode, **caractérisée en ce que** l'électrode E* supplémentaire est reliée de manière à conduire des électrons à la cathode par l'intermédiaire d'une résistance R* à configuration variable avec une résistance de surface comprise entre 0,1 et 1 ohm x cm$^2$ par rapport à la surface cellulaire active.

3. Pile à combustible directe à méthanol selon la revendication 2, comprenant une électrode E* supplémentaire, dont la composition est identique à celle de l'anode.

4. Pile à combustible directe à méthanol selon l'une quelconque des revendications précédentes 2 à 3, comprenant une électrode E* supplémentaire comprenant du Nafion® et un carbone, et un catalyseur de platine/de ruthénium supporté.

5. Pile à combustible directe à méthanol selon l'une quelconque des revendications précédentes 2 à 4, dans le cadre de laquelle respectivement une membrane conductrice d'ions présentant une composition identique est disposée entre l'anode et l'électrode E* supplémentaire et entre l'électrode E* supplémentaire et la cathode.

6. Pile à combustible directe à méthanol selon la revendication précédente 5, dans le cadre de laquelle les épaisseurs de couche des membranes conductrices d'ions entre l'anode et l'électrode E* supplémentaire et entre l'électrode E* supplémentaire et la cathode sont identiques.

7. Pile à combustible directe à méthanol selon l'une quelconque des revendications précédentes 2 à 5, dans le cadre de laquelle l'épaisseur de couche de la membrane conductrice d'ions entre l'anode et l'électrode E* supplémentaire est plus grande que celle entre l'électrode E* supplémentaire et la cathode.

$V_{ox}^{eq} = 1{,}23\ \text{V}$

$\eta_{ox}^{c} = -\ 0{,}43\ \text{V}$

$|\Phi|$

$V_{c}^{c} = -0{,}5\ \text{V}$

$\eta_{M}^{c} = 0{,}8\ \text{V}$

$V_{c}^{a} = \quad 0\ \text{V}$

$\eta_{M}^{a} = 0{,}3\ \text{V}$

$\Phi = -0{,}3\ \text{V}$

Figur 1

Figur 2a

$$CH_3OH + H_2O \rightarrow CO_2 + 6H^+ + 6e^-$$

$$^3/_2O_2 + 6H^+ + 6e^- \rightarrow 3H_2O$$

Figur 2b

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1453131 A2
- EP 1571724 A2
- US 5958616 A

**In der Beschreibung aufgeführte Nicht-Patentliteratur**

- **C. Y. DU ; T. S. ZHAO ; C. XU.** *Journal of Power Sources,* 2007, vol. 167, 265-271
- **A. A. KULIKOVSKY ; H. SCHMITZ ; K. WIPPERMANN ; J. MERGEL ; B. FRICKE ; T. SANDERS ; D. U. SAUER.** DMFC: Galvanic or Electrolytic Cell?. *Electrochem. Comm,* 2006, vol. 8, 754-760
- **K. WIPPERMANN ; B. RICHTER ; K. KLAFKI ; J. MERGEL ; G. ZEHL ; I. DORBANDT ; P. BOGDANOFF ; S. FIECHTER ; S. KAYTAKOGLU.** Carbon Supported Ru-Se as Methanol Tolerant Catalysts for DMFC cathodes. Part II: Preparation and Characterisation of MEAs. *J. Appl. Electrochem.,* 2007, vol. 37, 1399